# EUROPÄISCHE PATENTSCHRIFT

(11) **EP 0 638 105 B1**
(45) Veröffentlichungstag und Bekanntmachung des Hinweises auf die Patenterteilung: **22.01.1997**
(21) Anmeldenummer: 93911767.7
(22) Anmeldetag: 20.04.1993
(51) Int. Cl.: C08K 5/00, C08L 35/08, C08K 3/00

(54) **VERFAHREN ZUM STABILISIEREN VON VINYLETHER/MALEINSÄUREANHYDRID COPOLYMERISATEN**
PROCESS FOR STABILISING COPOLYMERS OF MALEIC ANHYDRIDE AND VINYL ETHERS
PROCEDE DE STABILISATION DE COPOLYMERES D'ANHYDRIDE D'ACIDE MALEIQUE ET D'ETHER DE VINYLE

(30) Priorität: 29.04.1992 DE 4213972
(43) Veröffentlichungstag der Anmeldung: 15.02.1995
(73) Patentinhaber: BASF Aktiengesellschaft, 67063 Ludwigshafen (DE)
(72) Erfinder: MEYER, Harald, D-67157 Wachenheim (DE); SANNER, Axel, D-6710 Frankenthal (DE); FROSCH, Franz, D-6702 Bad Duerkheim (DE); RICHTER, Hans, D-6700 Ludwigshafen (DE)
(86) Internationale Anmeldenummer: EP9300954
(87) Internationale Veröffentlichungsnummer: WO9322374

(56) Entgegenhaltungen:
- EP-A- 0 061 079
- DE-A- 1 494 082
- US-A- 3 531 427

## Beschreibung

Die Erfindung betrifft ein Verfahren zum Stabilisieren von Copolymerisaten aus Maleinsäure oder Maleinsäureanhydrid und Vinylalkylethern gegen Molekulargewichtsabbau in wäßriger Lösung oder in einem organischen Lösemittel.

Copolymerisate aus Maleinsäure und Vinylalkylethern bzw. Copolymerisate aus Maleinsäureanhydrid und Vinylalkylethern sind bekannte Stoffe, vgl. US-A-2 047 398 und Ind. Eng. Chem., Band 41, Seite 1509 (1949). Copolymerisate aus Maleinsäureanhydrid und Vinylalkylethern werden beim Auflösen in Wasser hydrolysiert, wobei aus einer Anhydridgruppierung 2 Carboxylgruppen entstehen. Es handelt sich dann formal um Copolymerisate, die aus Maleinsäure- und Vinylalkylether-Einheiten aufgebaut sind. Die Viskosität der wäßrigen Lösungen von Copolymerisaten aus Maleinsäure und Vinylalkylethern ist eine Logarithmus-Funktion des Molekulargewichts. Gemäß dem von der GAF-Corporation veröffentlichten Techn. Bull. 7543-017 aus dem Jahre 1965 liegen die maximal handhabbaren Konzentrationen von Copolymerisaten aus Maleinsäure und Alkylvinylethern bei 25°C für ein Polymerisat mit einer spezifischen Viskosität (1 g pro 100 ml Methylethylketon) von 2,6 bis 3,5 bei 20 Gew.-% und für Copolymerisate mit einer spezifischen Viskosität von 0,1 bis 0,5 bei 35 Gew.-%. Bei diesen relativ geringen Polymerkonzentrationen sind vor allem die hochviskosen und verdünnten wäßrigen Lösungen oder Lösungen von Copolymerisaten aus Maleinsäure und Alkylvinylethern anfällig für einen Molekulargewichtsabbau, vgl. B.C. Trivedi und B.M. Culbertson's Maleic Anhydrid, Plenum Press, New York, 1982, S. 437.

Um wäßrige Lösungen von Polyacrylsäure gegen Gelbildung beim lagern zu stabilisieren, ist aus der US-A-2 789 099 bekannt, Acrylsäure in wäßriger Lösung in Gegenwart von Natriumhypophosphit als viskositätsregulierendem Mittel und in Gegenwart von Kupfersalzen zu polymerisieren.

Aus der DE-A-30 30 344 ist bekannt, daß man zur Herstellung von pulverförmigen hochmolekularen Acrylamidpolymerisaten wäßrige Lösungen dieser Polymerisate in Gegenwart von tert.-Butylgruppen enthaltenden Phenolen, Thioethern oder Phosphiten trocknet. Diese Verbindungen können auch bereits während der Polymerisation anwesend sein. Sie verhindern beim Trocknen das Unlöslichwerden der Polymerisate.

Der vorliegenden Erfindung liegt die Aufgabe zugrunde, Copolymerisate aus Maleinsäure oder Maleinsäureanhydrid und Alkylvinylethern gegen einen Molekulargewichtsabbau, der vor allem in wäßriger Lösung oder in einem organischen Lösemittel eintritt, zu stabilisieren.

Die Aufgabe wird erfindungsgemäß gelöst mit einem Verfahren zum Stabilisieren von Copolymerisaten aus Maleinsäure oder Maleinsäureanhydrid und Vinylalkylethern gegen Molekulargewichtsabbau, wenn man zu Lösungen der Copolymerisate in Wasser oder in einem organischen Lösemittel 0,001 bis 10 Gew.-%, bezogen auf die Copolymerisate, eines Reduktionsmittels, ausgewählt aus der Gruppe bestehend aus schwefliger Säure, Phosphinsäure, Dithionsäure, Ascorbinsäure, Ammonium- oder Alkalimetallsalze der genannten Säuren, zusetzt.

Die Stabilisierung der Copolymerisate wird in der Weise vorgenommen, daß man die in Betracht kommenden Stabilisatoren zu wäßrigen Lösungen oder zu Lösungen der Copolymerisate in einem organischen Lösemittel zusetzt. Die Stabilisatoren werden dabei in Mengen von 0,001 bis 10, vorzugsweise 0,01 bis 5 Gew.-% eingesetzt. Üblicherweise werden die Stabilisatoren in Mengen von 0,05 bis 2 Gew.-% verwendet. Sie können den Lösungen der Copolymerisate direkt im Anschluß an die Polymerisation oder dann zu Polymerlösungen zugegeben werden, sofern sie gegen Molekulargewichtsabbau stabilisiert werden sollen. Meistens werden die Stabilisatoren direkt nach der Polymerisation zu der vorliegenden Lösung zugefügt, damit schon während der Aufarbeitung der Copolymerisate ein Molekukargewichtsabbau vermieden wird.

Die Copolymerisate sind im wesentlichen alternierend aufgebaut und enthalten als eine wesentliche Komponente Maleinsäureanhydrid oder Maleinsäure und als andere Komponente mindestens einen Alkylvinylether. Sämtliche Alkylvinylether können hierbei zur Herstellung der Copolymerisate verwendet werden, z.B. Vinylalkylethern mit 1 bis 30 C-Atomen in der Alkylgruppe. Bevorzugt sind Vinylalkylether, die 1 bis 18 C-Atome haben. Die Verwendung der Stabilisatoren ist besonders bei Copolymerisaten mit hohen Molekulargewichten von Interesse. Beispielsweise liegen die K-Werte nach H. Fikentscher für Copolymerisate aus Maleinsäureanhydrid und Alkylvinylethern, gemessen 1 gew-%ig in Cyclohexanon, bei 25 bis 110. Vorzugsweise werden Copolymerisate mit K-Werten von mehr als 45 erfindungsgemäß stabilisiert.

Copolymerisate aus Maleinsäure und Alkylvinylethern haben K-Werte von 30 bis 180 (bestimmt nach H. Fikentscher bei einer Polymerkonzentration von 1 Gew.-% und 25°C bei pH 7 am Natriumsalz) bzw. von 30 bis 330 (bestimmt nach H. Fikentscher bei einer Polymerkonzentration von 0,1 Gew.-% und 25°C bei pH 2). Während die niedrig molekularen Copolymerisate aus Maleinsäureanhydrid oder Maleinsäure und Alkylvinylethern auch in Lösung relativ beständig sind, tritt bei den Lösungen von höhermolekularen Copolymerisaten rasch ein unerwünschter Abbau ein, sofern die Copolymerisate nicht dagegen stabilisiert sind. Der Zusatz der Stabilisatoren zu den Lösungen der Copolymerisate erfolgt zweckmäßigerweise in dem Temperaturbereich von 0 bis 60, vorzugsweise bei 10 bis 45°C. Als Lösemittel für Copolymerisate aus Maleinsäureanhydrid und Alkylvinylether kommen alle organischen Lösemittel in Betracht, die nicht mit den Anhydridgruppen des Copolymerisats reagieren, z.B. Ketone, Ester und Ether. Beispiele für einzelne Verbindungen sind:

Aceton, Methylethylketon, Ethylacetat, Isopropylacetat, Butylacetat, Isobutylacetat, Tetrahydrofuran, Methylacetat, Butylformiat, Cyclohexanon, Cyclopentenon und Propylformiat.

Die Konzentration der Copolymerisate in den organischen Lösemitteln beträgt üblicherweise 5 bis 70 Gew.-%.

Copolymerisate aus Maleinsäure und Vinylalkylethern werden vorzugsweise in Form der wäßrigen Lösungen stabilisiert.

Die in den Beispielen angegebenen K-Werte wurde nach H. Fikentscher, Cellulosechemie, Band 13, Seite 58 bis 64 und 71 bis 74 (1932), bestimmt. Copolymerisate aus Maleinsäureanhydrid und Alkylvinylethern wurden in 1 %iger Lösung in Cyclohexanon und Copolymerisate aus Maleinsäure und Alkylvinylethern in 0,1 %iger wäßriger Lösung bei einer Temperatur von 25°C und einem pH-Wert von 2 bestimmt.

### Beispiele

### Herstellung der Copolymerisate

### Copolymerisat 1

In einem 2 1-Glasrührbehälter, der mit Ankerrührer, Rückflußkühler und Dosiereinrichtungen versehen war, wurden unter Stickstoff 155 g Aceton vorgelegt. Aus 300 g Maleinsäureanhydrid und 400 g Aceton wurde eine Lösung bereitet, die als Zulauf 1 diente. 264 ml Vinylmethylether dienten als Zulauf 2. Eine Lösung von 4,5 g 2,2'-Azobis(2,4-dimethylvaleronitril) in 90 g Aceton bildete Zulauf 3. Von Zulauf 1 wurden 45 ml, von Zulauf 2 und von Zulauf 3 jeweils 15 ml in die Vorlage gegeben und danach wurde zum Sieden erhitzt.

Nach 15 Minuten Sieden wurden Zulauf 1 und Zulauf 2 in 4 Stunden und Zulauf 3 in 5 Stunden zudosiert, wobei ständig Rückfluß aufrecht erhalten wurde. Nach beendeter Zugabe des Zulaufs 3 wurde 2 Stunden bei Siedetemperatur nachpolymerisiert. Anschließend wurden 150 ml Aceton abdestilliert. Man erhielt eine klare, farblose Lösung mit einem Feststoffgehalt von 48,9 Gew.-%. Der K-Wert betrug 59,2 (1 %ig in Cyclohexanon).

Zu dieser Lösung wurden bei 56°C innerhalb von einer Stunde 60 g Wasser gegeben und eine Stunde bei dieser Temperatur nachgerührt. Dann wurde bei 800 hPa Lösemittel abdestilliert, wobei nach und nach 1.550 g Wasser portionsweise zugegeben wurden. Insgesamt wurden ca. 800 ml Lösemittel abdestilliert. Nach Ende der Destillation erhielt man eine leicht gelbliche Lösung mit einem Feststoffgehalt von 25,3 Gew.-%. Der K-Wert (0,1 gew.-%ig in Wasser bei 25°C und pH 2) betrug 162,3 und die spezifische Viskosität ηₛₚ = 1,2.

### Copolymerisat 2

Man verfährt wie bei der Herstellung des Copolymerisats 1 beschrieben, verwendet jedoch als Polymerisationsinitiator 2,2 g tert.-Amylperneodekanoat. Man erhält eine klare, farblose Lösung mit einem Feststoffgehalt von 50,1 Gew.-%. Der K-Wert des Copolymerisates aus Maleinsäureanhydrid und Vinylmethylether betrug 70,3 (1 gew.-%ig in Cyclohexanon). Nach der Hydrolyse erhielt man eine fast farblose wäßrige Lösung mit einem Feststoffgehalt von 13,4 Gew.-%. Das Copolymerisat aus Maleinsäure und Methylvinylether hatte einen K-Wert von 208,4 (0,1 %ig in Wasser bei 25°C und pH2).

### Beispiel 1

Proben der 25,3 gew.-%igen wäßrigen Lösung des Copolymerisats 1 wurden bei einer Temperatur von 25°C in Flaschen aus farblosem Glas gegeben und mit den in Tabelle 1 angegebenen Stabilisatoren versetzt und bei 25°C gelagert. Im Fall (f) betrug die Mischungs- und Lagertemperatur 45°C. Zum Vergleich wurde eine nicht stabilisierte Probe zusammen mit den stabilisierten ProDen bei 25°C gelagert (g). Nach den in Tabelle 1 jeweils angegebenen Zeiten wurden die K-Werte der Copolymerisate bestimmt. Sie werden als ein Maß für die Wirksamkeit der getesteten Stabilisatoren gewertet.

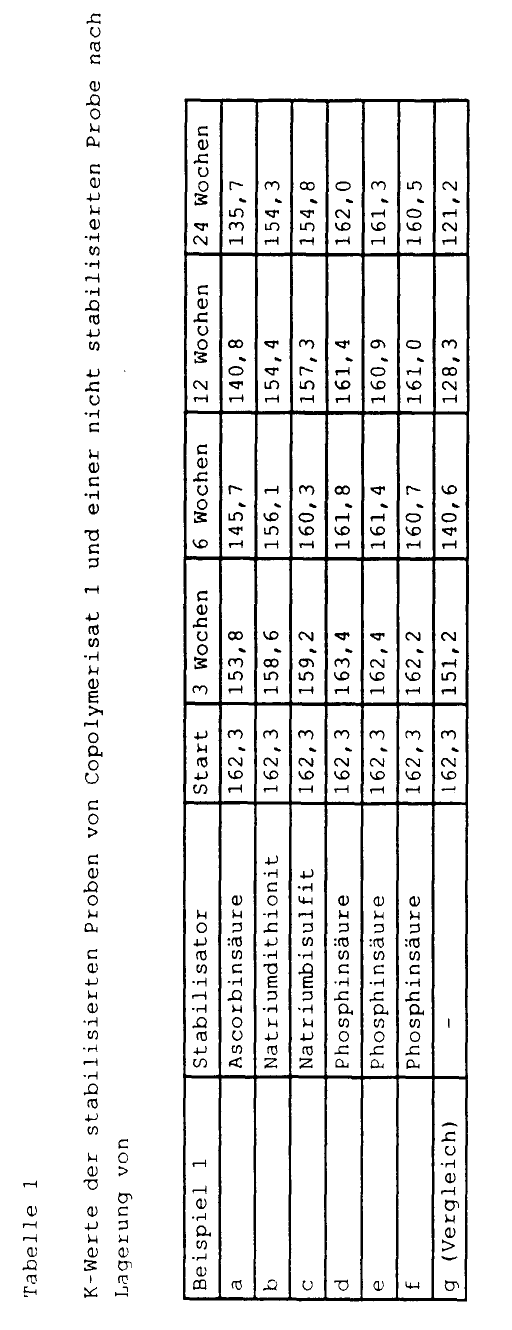

### Beipiel 2

Die 13,4 gew.-%ige wäßrige Lösung des Copolymerisats 2 wurde in mehrere Portionen geteilt, die dann jeweils mit den in Tabelle 2 angegebenen Mengen an Stabilisatoren versetzt wurden. Mit Ausnahme der Probe (f), bei der 0,05 Gew.-% Phosphinsäure als Stabilisator verwendet wurde, setzte man jeweils 0,1 Gew.-% der in Tabelle 2 angegebenen Stabilisatoren zu. Während in den Beispielen a bis e die Temperatur der wäßrigen Lösung 25°C betrug, lag sie bei Beispiel f bei 45°C. Die so stabilisierten wäßrigen Lösungen des Copolymer 2 wurden bei einer Temperatur von 25°C (Beispiele a bis e) bzw. 45°C (Beispiel f) gelagert. Nach den in Tabelle 2 angegebenen Zeiten wurden jeweils Proben entnommen und der K-Wert der Polymerisate bestimmt. Die Ergebnisse sind in Tabelle 2 angegeben. Zum Vergleich wurde eine nicht stabilisierte Probe getestet (g).

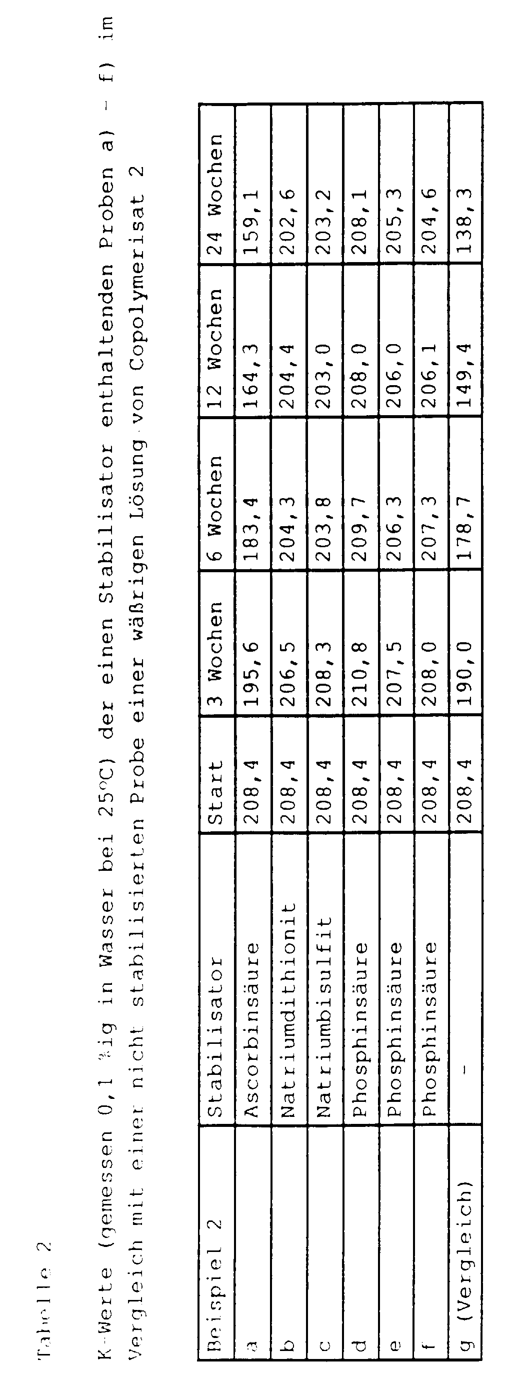

## Patentansprüche

1. Verfahren zum Stabilisieren von Copolymerisaten aus Maleinsäure oder Maleinsäureanhydrid und Vinylalkylethern gegen Molekulargewichtsabbau, dadurch gekennzeichnet, daß man zu Lösungen der Copolymerisate in Wasser oder in einem organischen Lösemittel 0,001 bis 10 Gew.-%, bezogen auf die Copolymerisate, eines Reduktionsmittels, ausgewählt aus der Gruppe bestehend aus schwefliger Säure, Phosphinsäure, Dithionsäure, Ascorbinsäure, Ammonium- oder Alkalimetallsalze der genannten Säuren, zusetzt.

2. Verfahren nach Anspruch 1, dadurch gekennzeichnet, daß man zu Lösungen der Copolymerisate in Wasser eines der genannten Reduktionsmittel zusetzt.

## Claims

1. A process for stabilizing a copolymer of maleic acid or maleic anhydride and vinyl alkyl ethers against a reduction in molecular weight, which comprises adding from 0.001 to 10 % by weight, based on the copolymer, of a reducing agent, selected from the group consisting of sulfurous acid, phosphinic acid, dithionic acid, ascorbic acid and ammonium or alkali metal salts of said acids, to a solution of the copolymer in water or an organic solvent.

2. A process as calimed in claim 1, wherein one of said reducing agents is added to a solution of the copolymer in water.

## Revendications

1. Procédé de stabilisation de copolymères d'acide maléique ou d'anhydride de l'acide maléique et d'éthers alkylvinyliques contre la dégradation du poids moléculaire, caractérisé en ce qu'on ajoute à une solution de copolymère dans de l'eau ou dans un solvant organique, de 0,001 à 10% en poids, calculés par rapport au copolymère, d'un agent de réduction choisi parmi le groupe comprenant l'acide sulfureux, l'acide phosphinique, l'acide dithionique, l'acide ascorbique, les sels de métal alcalin ou d'ammonium des acides précités.

2. Procédé suivant la revendication 1, caractérisé en ce qu'on ajoute à une solution de copolymère dans de l'eau, un des agents de réduction précités.
